# EUROPEAN PATENT APPLICATION

(11) **EP 4 686 501 A1**
(43) Date of publication of application: **04.02.2026**
(21) Application number: 25181874.6
(22) Date of filing: 10.06.2025
(51) Int. Cl.: B01D 27/02, B01D 35/30, B01D 27/08

(54) **DRINKING WATER PITCHER AND DISPENSER WITH INTERCHANGEABLE CARTRIDGES**

(30) Priority: 31.07.2024 US 202463677845 P; 08.05.2025 US 202519202229
(71) Applicant: CULLIGAN INTERNATIONAL COMPANY, Rosemont, IL 60018 (US)
(72) Inventor: WIGGINS, Stephen, Morton Grove, 60053 (US); SIEGLE, Brittany, Doylestown, 18901 (US); PETNER, Bob, Burlington, 08016 (US); MARINELLI, Simon, Addison, 60101 (US); CATARDI, Anthony, Palatine, 60067 (US); SCHNEIDEWEND, Tedd, Glen Ellyn, 60137 (US); ROTE, Scott, Lac Du Flambeau, 54538 (US); ROLFS, Bryan, Chicago, 60618 (US); MILLER, Jackson, Chicago, 60647 (US); EIGER, Aaron, Chicago, 60613 (US); PRINCIPI, Nick, Elk Grove Village, 60007 (US); IK LEE, Sang, San Francisco, 94108 (US); KIM, Joseph, San Francisco, 94109 (US); KUH, Christopher, Oakland, 94610 (US)
(74) Representative: IPAZ

(57) **Abstract**

A water treatment system includes a main container (12) defining an interior and having an upper edge (16), a reservoir (16) removably insertable into the interior and located upon the upper edge, the reservoir defining a cartridge seat (18) including a plurality of holes (20) in communication with a helical thread (22), and an annular landing (24) vertically depending from the thread, a filter cartridge (10) including a cap (28) associated with a sump body (30) and having a filter media (42) in the sump body, the cap having a plurality of radially outwardly projecting pins (48) constructed and arranged for engaging the holes and the helical thread, an annular seal (50) disposed externally on the sump body and spaced below the cap. The filter cartridge and the cartridge seat are configured so that upon the cap pins engaging the helical thread, upon reaching a fully engaged position of the cap in the thread, the seal is compressed against the annular landing.

## Description

### RELATED APPLICATION

This patent application claims 35 U.S.C. 119 priority from, US Provisional application Serial No. 63/677,845 filed July 31, 2024, and US patent application Serial No. 19/202,229 filed May 8. 2025, the entire contents of which are incorporated by reference herein.

### BACKGROUND

The present invention relates generally to drinking water treatment systems, and more specifically to drinking water containers such as pitchers or dispensers having associated filter cartridges for treating tap water prior to consumption.

Known water filter pitcher or dispenser systems, commonly referred to here as containers or pitchers, include a main container that is large enough to accommodate an internal reservoir. A replaceable filter cartridge is conventionally engaged in the reservoir, and treats the tap water placed into the reservoir prior to passing the treated water into a lower portion of the main container.

Conventional water treatment systems of this type employ disposable filter cartridges including a rigid housing of plastic, enclosing a filter media such as granulated carbon, carbon block, or fibers as are well known in the art. Such cartridges have a working life of several months, depending on model and volume of water filtered. At the end of the working life of the cartridge, the user needs to remove the existing cartridge and replace it with a new one. In most cases, the spent cartridge is disposed of.

When replacing a water pitcher filter cartridge, it is important that the new cartridge is properly seated into the specially designed recess so that water poured into the reservoir for treatment does not bypass the cartridge and flow untreated into the main container. In some models of container, the consumer many have difficulty reaching and/or dislodging a spent filter cartridge. As such, designers of such systems need to balance ease of removal and replacement with structures that at that the same time create an effective and durable seal.

There is also a growing recognition of the amount of plastic solid waste being generated by modern consumers, with many companies attempting to reduce such waste. In the water treatment industry, this sentiment has been applied to disposable water filter cartridges, with an effort to reduce the volume of discarded materials. In particular, there is a focus in the industry on the reduction of plastic cartridge waste.

Accordingly, there is a need for an improved water filter pitcher system that addresses these design challenges.

### SUMMARY

The above-listed need is met or exceeded by the present water filter pitcher system that includes both disposable and reusable cartridge housings. Both types of cartridges are individually engageable in the pitcher reservoir and have a common engagement with a cartridge seat of the reservoir. A cap of each cartridge includes a plurality of radially projecting pins that fall into a like plurality of openings in the cartridge seat that are in communication with a helical thread in the cartridge seat. The pins fall through the openings and engage the thread as the user rotates the cartridge, preferably in a clockwise direction. During this rotation, the pins are guided in and follow the threads. As each cap is threaded into the seat, the cap moves vertically downward, and an annular seal on the cartridge body exterior is gradually pressed against an annular landing on the seat below the threads. Once fully threaded, the cap exerts a compression force that pushes the seal against the landing. Detent formations in the thread provide the user with a tactile sensation of when the cartridge is fully threaded into the reservoir.

Both of the cartridges have integral gripping tabs for facilitating user removal of the cartridge when needed. The disposable cartridge is configured so that the gripping tabs are spaced apart to define a space for an air escape outlet for allowing air to escape the filter media as water is introduced. In the disposable cartridge, the cap is fixed to a sump body that retains the filter media.

The reusable cartridge housing has a removable cap with a depending cage and seal ring. Configuration of the cage causes compression against the removable, compressible media and seals it. Since the media is configured to surround the cartridge outlet, as such, incoming water must pass through the media before entering the main container.

More specifically, a water treatment system is provided, including a main container defining an interior and having an upper edge, a reservoir configured for removable insertion into the interior and location upon the upper edge, the reservoir defining a cartridge seat, the cartridge seat including a plurality of holes in communication with a helical thread, and an annular landing vertically depending from the thread, a filter cartridge including a cap associated with a sump body and having a filter media in the sump body, the cap having a plurality of radially outwardly projecting pins constructed and arranged for engaging the holes and the helical thread, an annular seal disposed externally on the sump body and spaced below the cap. The filter cartridge and the cartridge seat are configured so that upon the cap pins engaging the helical thread, upon reaching a fully engaged position of the cap in the thread, the seal is compressed against the annular landing.

In an embodiment, a number of the pins is equal to a number of the openings in the cartridge seat. Another feature is that a detent is associated with an end of the helical thread and is configured so that upon engagement with one of the pins, a user receives a tactile sensation of full engagement of the cap in the thread.

In one embodiment, the filter cartridge cap is rotatable relative to the sump body, and a supply of filter media is contained within the sump body. In an alternate embodiment, the filter cartridge cap is threadably engaged onto the sump body using a cartridge thread that is in reverse direction to a direction of the helical thread. Another feature of the alternate filter cartridge configuration is that the filter cartridge cap has a depending cage with an annular seal configured for compressing a removable filter media located at a bottom of the sump body.

In an embodiment, the filter cartridge sump body has a bottom end with a screened outlet for treated water. Also, in a preferred embodiment, the filter cartridge cap has at least one gripping tab for user manipulation of the cartridge in the cartridge seat. In one embodiment, the gripping tab is a pair of tabs separated by an air escape port.

In one embodiment, the filter cartridge cap is provided with a mesh screen for allowing inflow of water, but preventing escape of the filter media.

In an embodiment, included is a cover cup dispenser configured for releasable attachment to an upper edge of the main container, the cover cup dispenser having a lid dispenser slidingly engaged relative to an opening in the cover cup dispenser between an open and a closed position, the cover cup dispenser including an underside with a track configured for guiding the sliding of the lid dispenser.

In another embodiment, a filter cartridge is provided for use in a water treatment system including a main container defining an interior and having an upper edge, a reservoir configured for removable insertion into the interior and location upon the upper edge, the reservoir defining a cartridge seat, the cartridge seat including a plurality of holes in communication with a helical thread, and an annular landing vertically depending from the thread. The filter cartridge includes a cap having a plurality of radially outwardly projecting pins constructed and arranged for engaging the holes and the helical thread, a sump body configured for engagement with the cap, the sump body having a contained filter media, an annular seal disposed externally on the sump body and spaced below the cap. It is preferred that the filter cartridge is configured so that upon the cap pins engaging the helical thread, upon reaching a fully engaged position of the cap in the thread, the seal is compressed against the annular landing.

In a preferred embodiment of the filter cartridge, the filter cartridge cap has a vertically projecting annular skirt, and the plurality of pins project horizontally from the skirt. In another embodiment of the filter cartridge, the filter cartridge cap is threadably engaged onto the sump body using a counter-clockwise cartridge thread, and the filter cartridge cap is threadably engaged onto the cartridge seat using a clockwise thread. In an embodiment, the filter cartridge sump body has a bottom end with a screened outlet for treated water.

In yet another embodiment, a filter cartridge is provided for use in a water treatment system including a main container defining an interior and having an upper edge, a reservoir configured for removable insertion into the interior and location upon the upper edge, the reservoir defining a cartridge seat, the cartridge seat including a plurality of holes in communication with a helical thread, and an annular landing vertically depending from the thread. The filter cartridge includes a cap having a plurality of radially outwardly projecting pins constructed and arranged for engaging the holes and the helical thread, a sump body configured for engagement with the cap. Preferably, the filter cartridge cap is threadably engaged onto the sump body using a counter-clockwise cartridge thread.

In addition, the sump body has a contained filter media, an annular seal disposed externally on the sump body and spaced below the cap. The filter cartridge cap has a depending cage with an annular seal configured for compressing a removable filter media located at a bottom of the sump body.

Preferably, the filter cartridge is configured so that upon the cap pins engaging the helical thread, upon reaching a fully engaged position of the cap in the thread, the seal is compressed against the annular landing.

In another embodiment, the filter cartridge is provided with a cap that snaps onto an upper end of the sump body. At least one depending clip on the cap snappingly engages a lip on an upper end of the sump body. Upon engagement of the snap-on cap with the sump body, the cap is rotatable relative to the sump body, which facilitates engagement in the cartridge seat of the pitcher reservoir.

In another embodiment, the pitcher includes a TDS meter extender built into the pitcher body and includes internal circuitry with a pair of contact pins projecting into the main pitcher chamber for measuring the TDS of filtered water. A TDS meter is removably secured to the pitcher and includes depending contact formations that mechanically and electrically engage contacts in the extender for electrically connecting the meter to the contact pins. In a preferred embodiment, the depending contact formations on the meter are parallel to a longitudinal meter axis, and the projecting contact pins in the extender are disposed at a 90° angle to the contact formations.

In another embodiment, the pitcher and/or dispenser is provided with a cover cup dispenser or lid configured for preventing unwanted mingling of unfiltered water in the reservoir with filtered water in the pitcher. A multi-rib flexible seal is placed at least around a front edge of the lid. A sliding lid dispenser slides relative to the lid between an open and a closed position. Tactile formations on at least one of the lid dispenser and the lid alert the user to the position of the lid.

### BRIEF DESCRIPTION OF THE DRAWINGS

FIG. 1 is a top perspective view of an embodiment of the present water filter cartridge;
FIG. 2 is a vertical cross-section of the filter cartridge of FIG. 1;
FIG. 3 is an exploded perspective view of the filter cartridge of FIG. 1;
FIG. 4 is a fragmentary top perspective view of the present water filter cartridge disposed in a cartridge seat of the reservoir, shown installed in a pitcher;
FIG. 5 is a fragmentary top perspective view of the cartridge of FIG. 1;
FIG. 6 is an enlarged, fragmentary cross-section of the filter cartridge of FIG. 1 disposed in a cartridge seat of the reservoir;
FIG. 7 is another enlarged, fragmentary cross-section of the filter cartridge of FIG. 1 in the cartridge seat;
FIG. 8 is a top perspective view of an alternate embodiment of the present filter cartridge;
FIG. 9 is a vertical cross-section of the filter cartridge of FIG. 8;
FIG. 10 is an exploded perspective view of the filter cartridge of FIG. 8;
FIG. 11 is an exploded top perspective view of the filter cartridge of FIG. 8 located in the present water dispenser;
FIG. 12 is a fragmentary top perspective view of the present water pitcher having the filter cartridge of FIG. 8;
FIG. 13 is a vertical cross-section of the present reservoir;
FIG. 14 is a top perspective view of the filter cartridge of FIG. 8;
FIG. 15 is a fragmentary top perspective view of the filter cartridge of FIG. 8 fully engaged in the helical thread of the cartridge seat;
FIG. 16 is a fragmentary vertical cross-section of the filter cartridge of FIG. 8 engaged in the cartridge seat;
FIG. 17 is an enlarged, fragmentary vertical cross-section of FIG. 16, showing the filter cartridge of FIG. 8 engaged in the cartridge seat;
FIG. 18 is a fragmentary top perspective of the filter cartridge of FIG. 8;
FIG. 19 is a bottom view of the filter cap for the filter cartridge of FIG. 8;
FIG. 20 is a fragmentary top perspective view of the filter cartridge of FIG. 8 with the cartridge cap shown transparent for clarity;
FIG. 21 is a fragmentary vertical cross-section of the filter cartridge of FIG. 8 shown engaged in the cartridge seat;
FIG. 22 is a fragmentary top perspective view showing the filter cartridge of FIG. 8 initially engaged in the thread of the cartridge seat;
FIG. 23 is a fragmentary top perspective view showing the filter cartridge of FIG. 8 fully engaged in the thread of the cartridge seat;
FIG. 24 is a fragmentary top perspective view showing the filter cartridge of FIG. 8 being partially disengaged from the cartridge seat;
FIG. 25 is an exploded, rear perspective view of the present pitcher with reservoir;
FIG. 26 is an underside view of the cover cup dispenser of the present system with the lid dispenser in the closed position;
FIG. 27 is an underside view of the cover cup dispenser of the present system with the lid dispenser in the open position;
FIG. 28 is a cross-section taken along the line 28-28 of FIG. 26 in the direction generally indicated;
FIG. 29 is a fragmentary perspective view of an alternate embodiment of the filter cartridge shown in FIGs. 1-3;
FIG. 30 is an enlarged fragmentary perspective view of the filter cartridge of FIG. 29;
FIG. 31 is a fragmentary side elevation of an embodiment of the present pitcher equipped with a removable TDS meter and an extender;
FIG. 32 is a fragmentary exploded perspective view of the TDS meter engaging the extender;
FIG. 33 is a fragmentary vertical cross-section of an embodiment of the present cup dispenser;
FIG. 34 is a fragmentary bottom perspective view of the cup dispenser of FIG. 33 in an open position; and
FIG. 35 is a fragmentary bottom perspective view of the cup dispenser of FIG. 33 in a closed position.

### DETAILED DESCRIPTION

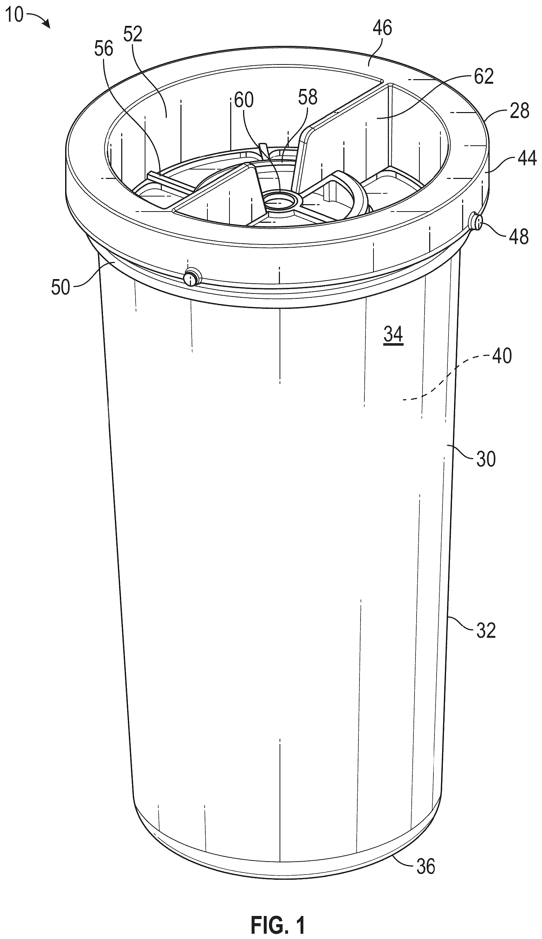

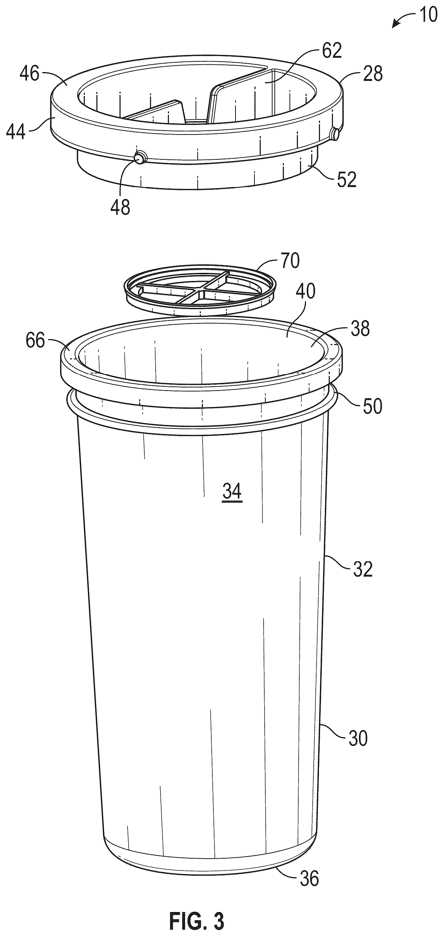

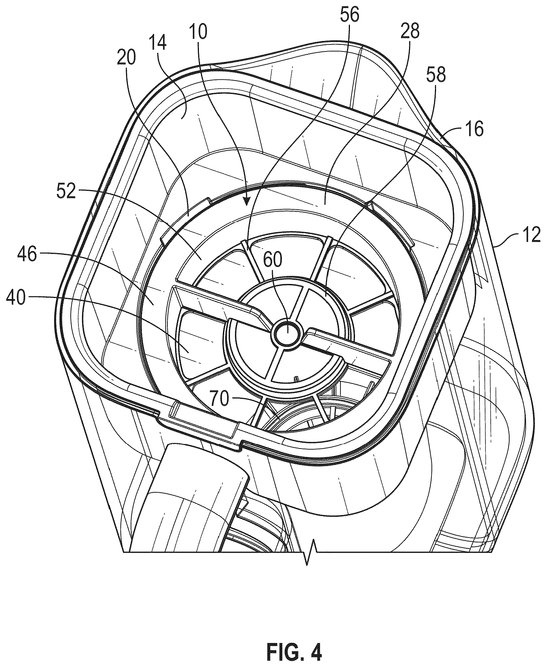

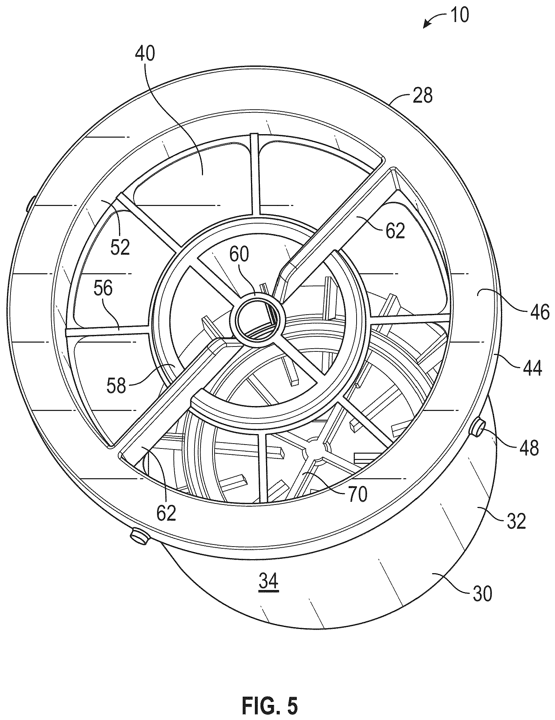

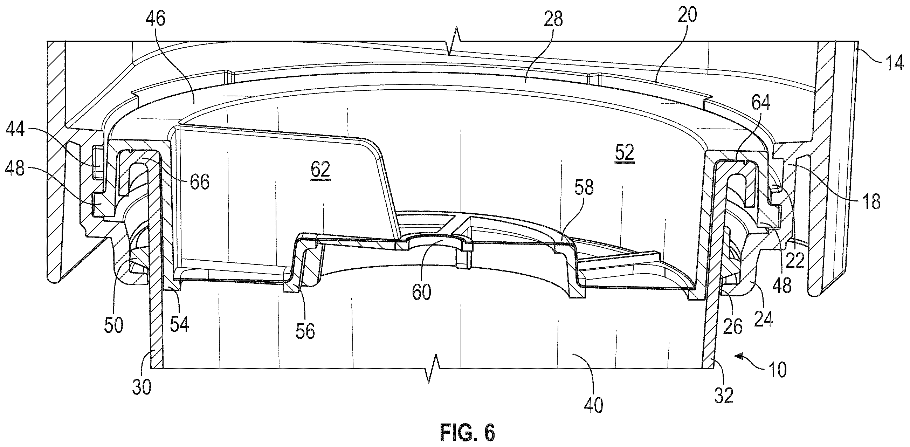

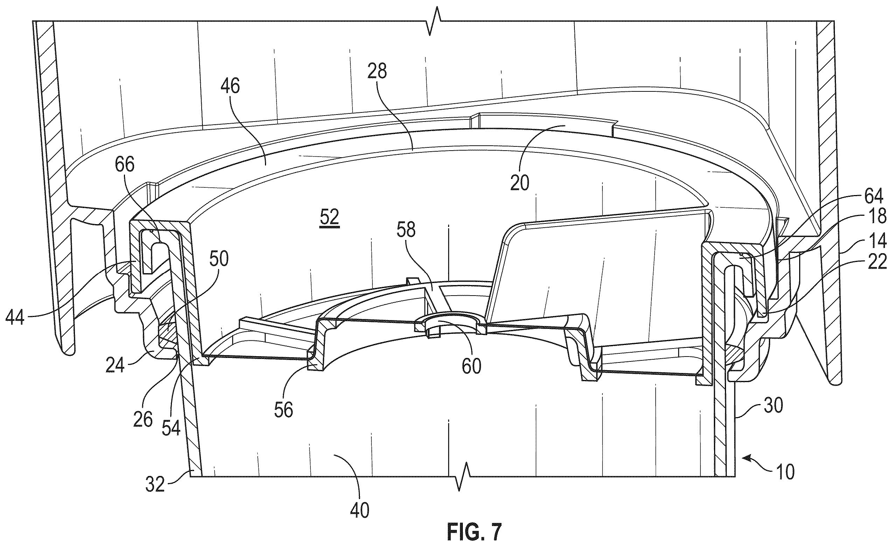

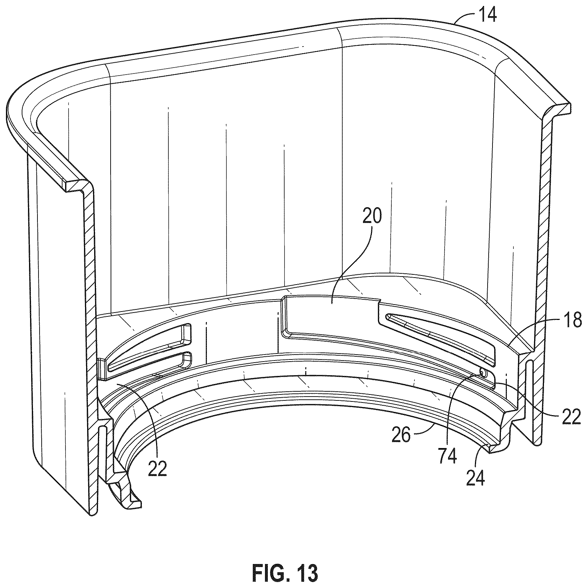

Referring now to FIGs. 1-7 and 13, a disposable filter cartridge 10 is disclosed for use with a main container 12, here depicted as a water pitcher (FIG. 4) having a removable, insertable reservoir 14 engaging an upper edge 16 of the container, and defining an annular cartridge seat 18. It is contemplated that the filter cartridge 10, the pitcher 12 and the reservoir 14 are made of rigid, durable material such as injection molded plastic or other suitable materials. Included on the cartridge seat 18 is a plurality of slot-like holes 20 in communication with a helical thread 22 (FIGs. 6 and 7). Also included on the cartridge seat 18 is an annular landing 24 forming an inwardly projecting ledge that defines an opening 26 in the reservoir 14 (FIG. 13).

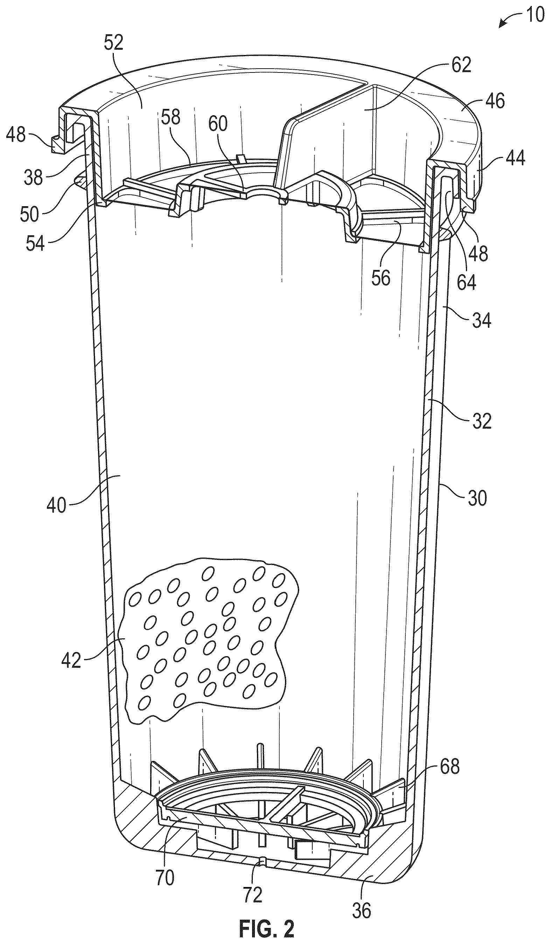

Referring now to FIGs. 1-5, the cartridge 10 includes a cap 28 associated with, and preferably fixed to, a cup-shaped sump body 30, having a generally cylindrical wall 32, with an exterior 34, and a bottom 36 of the sump body. The cap 28 is affixed to an open upper end 38, and defines an interior chamber 40 that contains a supply of filter media 42 (FIG. 2). As is known in the art, the media 42 is contemplated as being granulated carbon, fibers, carbon block or other conventional media used for filtering particulates, and improving taste of potable water.

An annular, depending skirt 44 of the cartridge cap 28 is connected to a cap upper surface 46 and is provided with a plurality of radially outwardly, generally horizontally-projecting pins 48 which are constructed and arranged for engaging the holes 20 and the helical thread 22 of the reservoir 14. While the number may vary to suit the application, it is preferred that the number of pins 48 equals the number of slot-like holes 20 in the reservoir 18.

Below the cartridge cap 28, the skirt 44 and the pins 48 is an annular seal 50 disposed externally on the sump body 30. The seal 50 is made of a resilient or rubber-like material and is affixed to the sump body 30 as by ultrasonic welding, chemical adhesive or the like.

Referring now to FIGs. 2, 3, 5, 6 and 7, also depending from the cap upper surface 46 is an inner ring 52, extending downward a distance below that of the skirt 44 and defining an annular attachment ledge 54 for a mesh screen 56 configured for allowing inflow of water while preventing escape of the filter media 42. A central boss 58 of the mesh screen defines an air escape port 60. Also, at least one and preferably a pair of gripping tabs 62 for user manipulation of the cartridge 10 into and out of engagement in the cartridge seat 18. Preferably the pair of gripping tabs 62 are separated by the air escape port 60.

Preferably, the cartridge cap 28 is integrally formed, as by injection molding or the like. The skirt 44, cap upper surface 46 and cap inner ring 52 combine to define a recess 64 (FIG. 2) which snugly receives an upper edge 66 of the sump body 30 for attachment. Also, at the bottom 36 of the sump body, a plurality of support ribs 68 support a lower screen 70 configured for allowing treated water to pass into the main container 12 but preventing the escape of the filter media 42. The sump bottom 36 also defines at least one cartridge outlet 72 constructed and arranged for allowing the flow treated water from the cartridge 10.

Referring now to FIGs. 6 and 7, the filter cartridge 10 and the cartridge seat 18 are configured so that upon the cap pins fully engaging the helical thread 22, in other words upon reaching a fully engaged position of the cap in the thread, the annular seal 50 is compressed against the annular landing 24. This sealing engagement of the seal 50 against the landing 24 prevents untreated tap water from the reservoir 14 from reaching the main container 12. Failure to fully engage the filter cartridge 10 in the cartridge seat 18 risks the chances of contamination of the filtered water in the man container with the untreated tap water of the reservoir 14, thus negating benefits provided by the filter cartridge 10.

Referring now to FIG. 13, in a preferred embodiment, the reservoir 14 is provided with an inwardly-projecting detent 74 located at or adjacent an end of the helical thread 22. Thus, as the cartridge cap 28 is fully threaded into the helical thread 22, the user can feel a tactile sensation as the closest pin 48 engages the detent 74.

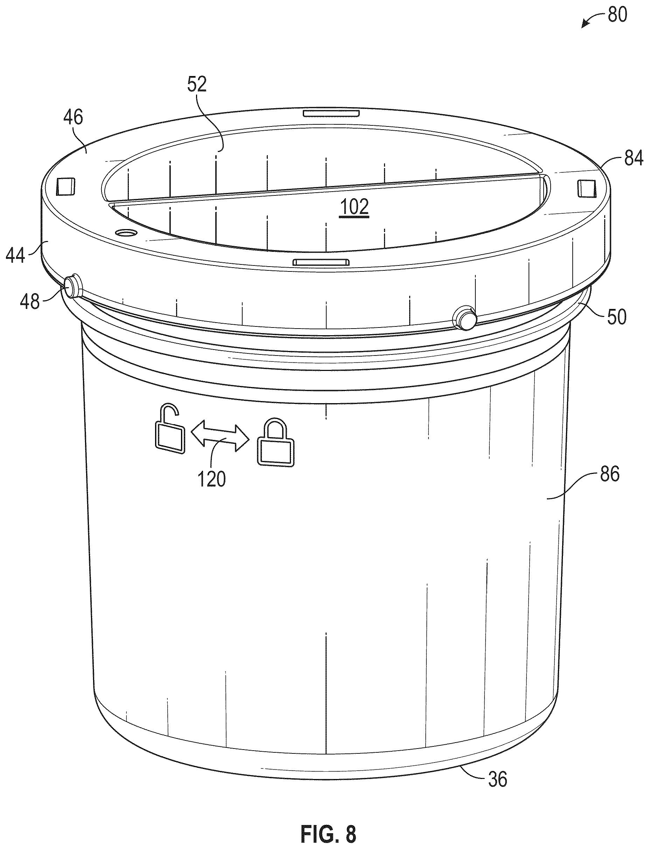

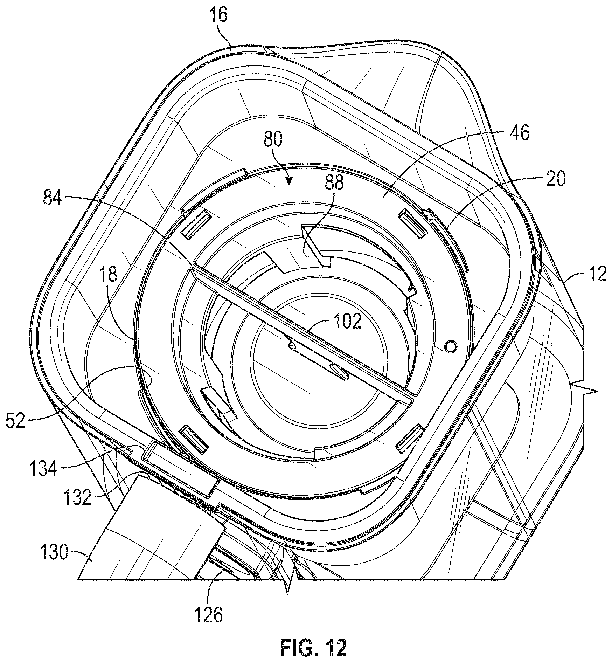

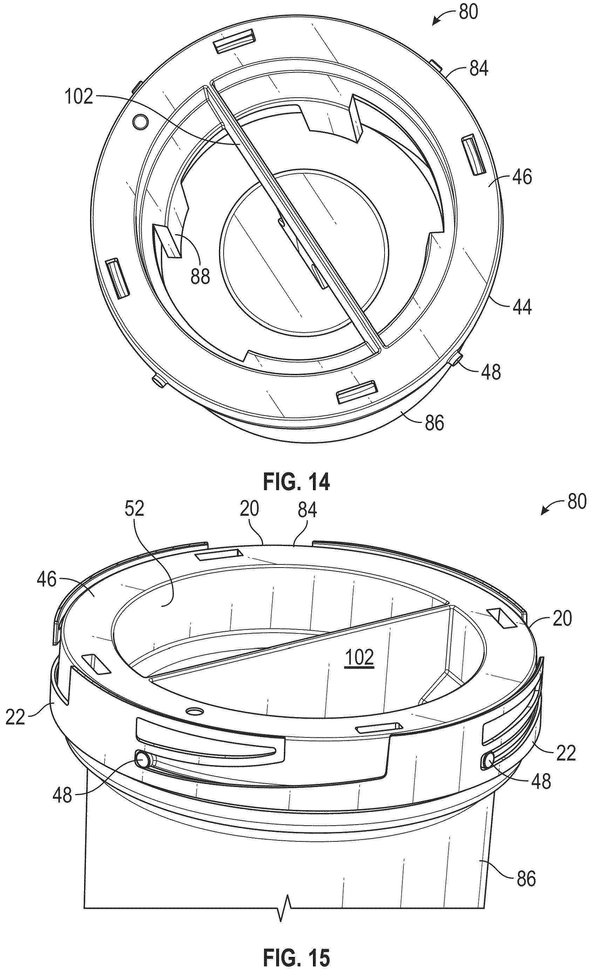

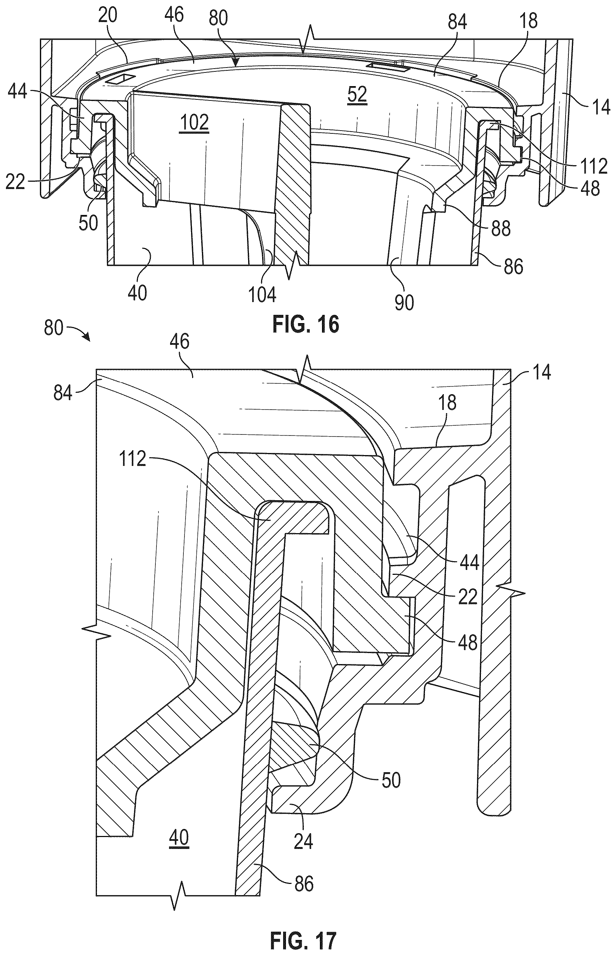

Referring now to FIGs. 8-12 and 14-19, an alternate filter cartridge is generally designated 80. Shared components with the filter cartridge 10 are designated with identical reference numbers. Both the filter cartridges 10 and 80 are respectively engageable in the cartridge seat 18 of the reservoir 14 in the same manner. A main difference between the cartridges 10, 80 is that while the former is disposable as a unit upon expiration, the latter employs a removable, disposable filter media 82, but a filter cap 84 and a sump body 86 are reusable.

To this end, the filter cap 84 includes that the inner ring 52 is connected to a depending cage 88 including a plurality of arms 90 connected at lower ends 92 to an annular seal ring 94. Once the filter cap 84 is fully engaged on the sump body 86, the seal ring 94 exerts pressure on, and seals the modular yet compressible media 82 against the bottom 36 of the sump body 86. Unlike the filter media 42 used in the cartridge 10, the filter media 82 is preferably a removable unit that has a donut shape, with a cylindrical exterior 96 defining a central open passage 98, and having an upper surface 100 engaged by the annular seal ring 94. Also, the filter media 82 has a composition that retains the cylindrical shape during use, but is sufficiently porous for allowing throughflow of potable water, and including constituents for eliminating unwanted taste, odor, particulates and the like in the manner of the media 42.

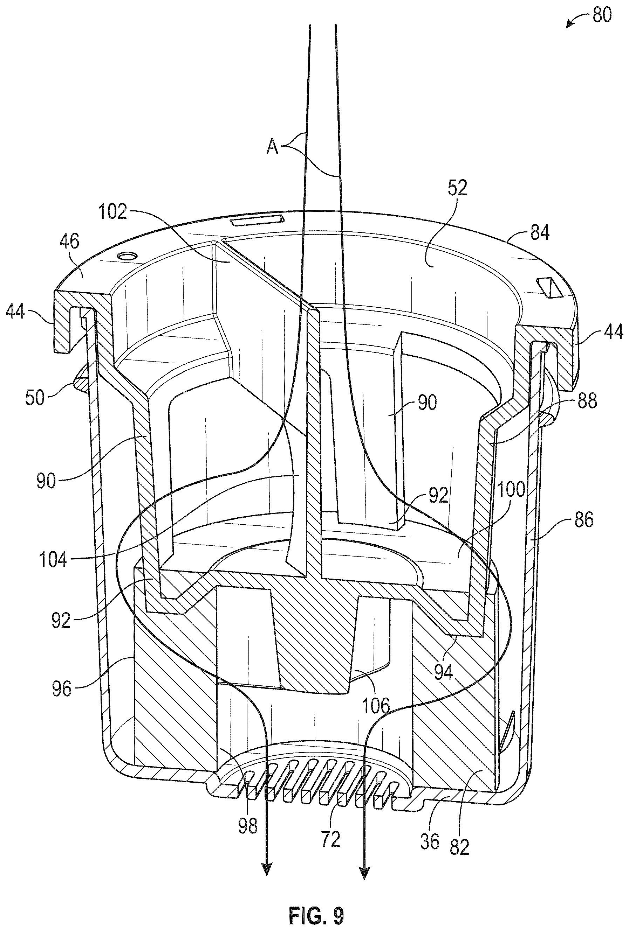

The sump body bottom 36 defines the outlet 72 that is surrounded by the filter media 82. Due to the pressure of the cage 88 on the filter media 82, untreated tap water flowing through the filter cap 84 must flow through the media via the direction of the arrows 'A' to exit the outlet 72 (FIG. 9). In the cartridge 80, a single gripping tab 102 spans the cap inner ring 52, and features a post 104 that is connected to a plug 106 that engages the central media passage 98 and also properly locates the cage 88 upon the media 82.

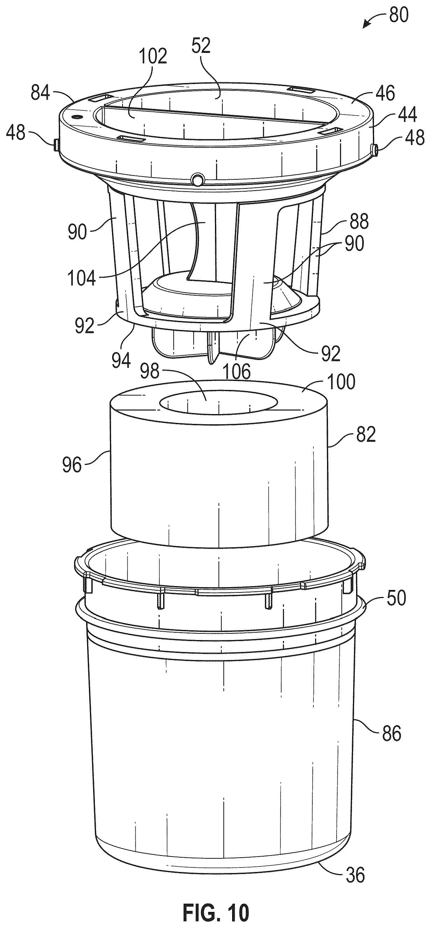

Referring now to FIGs. 10, 14, 18, 19, 20 and 21, another feature of the cartridge 80 is that the cap 84 is releasably attached to the sump body 86, preferably by a threaded engagement. It is further preferred that the filter cartridge cap 84 is threadably engaged onto the sump body 86 using a cartridge engagement that is in reverse direction to a direction of engagement of the cartridge cap 28 in the helical thread 22. Preferably, the cartridges 10, 80 engage the cartridge seat 18 in a clockwise direction, and the cartridge cap 84 engages the sump body 86 in a counter-clockwise direction, however other arrangements are contemplated. More specifically, an underside of the cartridge cap 84 includes a plurality of depending tabs 108 that are constructed and arranged for engaging a similar plurality of slots 110 in an upper edge 112 of the sump body 86.

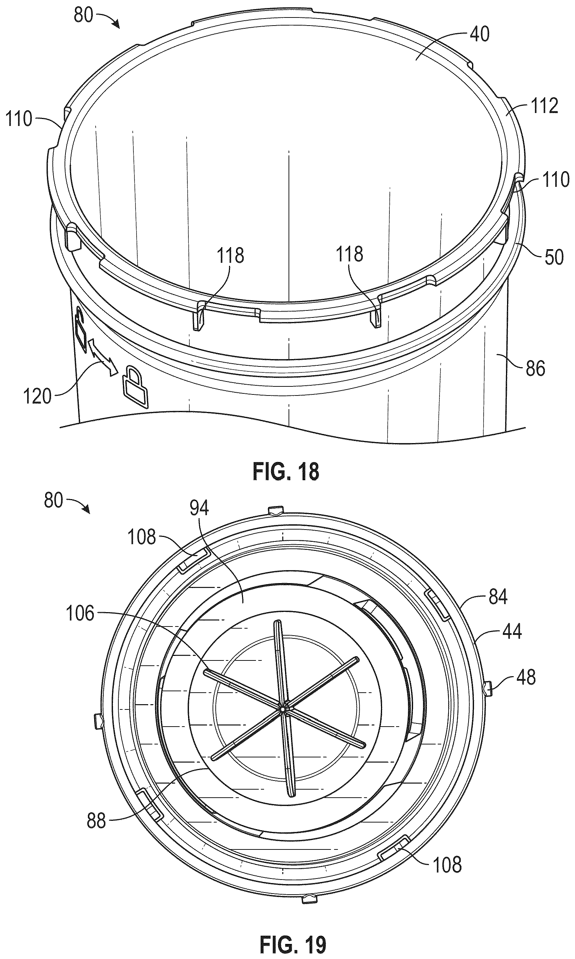

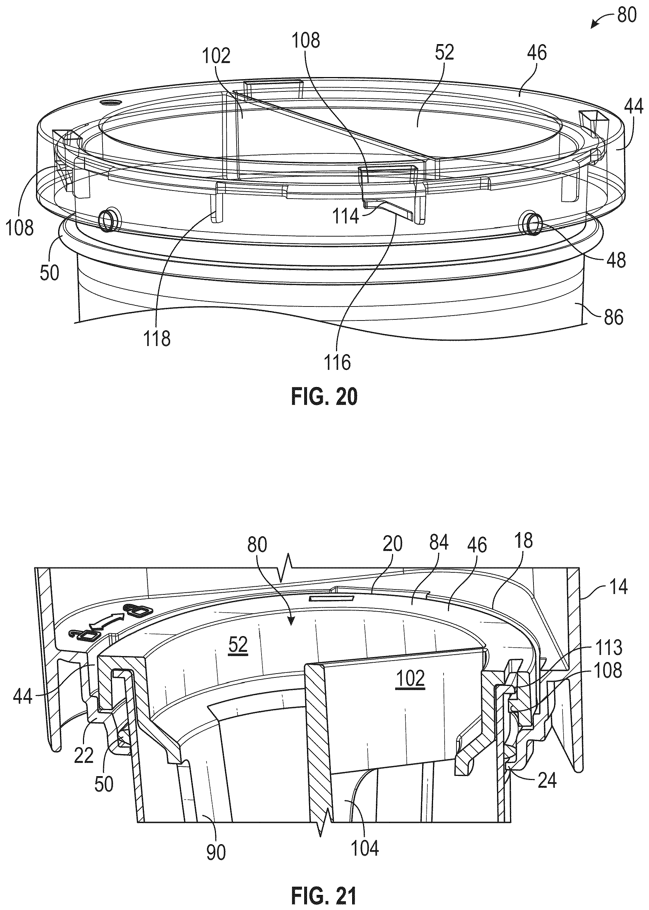

As seen in FIGs. 20 and 21, the depending tabs 108 are dimensioned to slidably engage the slots 110. In addition, an inner edge 113 of the tabs forms an undercut that clears the edge 112. Once the tabs 108 are engaged in the slots 110, counter-clockwise rotation of the filter cartridge cap 84 relative to the sump body 86 causes a ramped or angled upper edge 114 of an undercut on the tabs 108 to clear and slide by the edge 112 of the sump body 86. The tab 108 has a lower angled edge 116, which, at the end of the counter-clockwise rotation, engages an external stop 118 on the sump body 86. As seen in FIGs. 8 and 18, the cartridge 80 is preferably provided with indicia 120 to assist the user in counter-rotating the cartridge cap 84 onto the sump body 86.

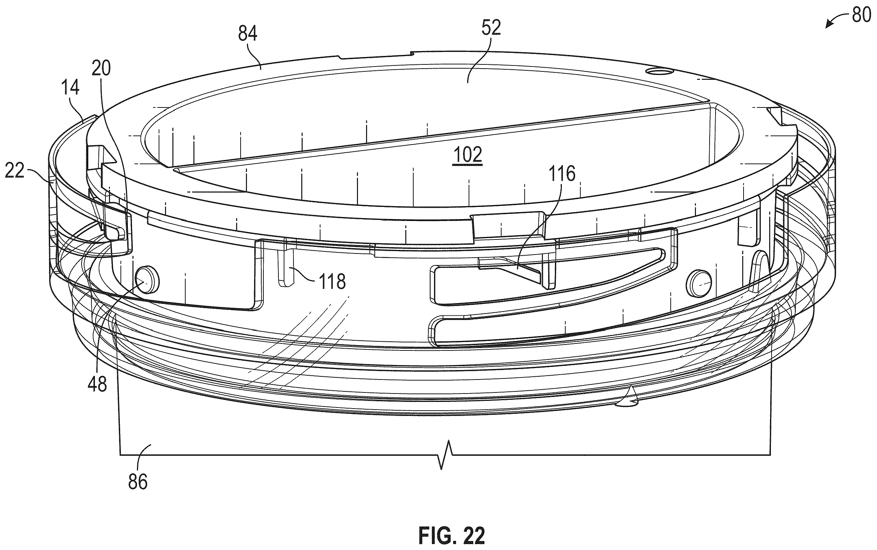

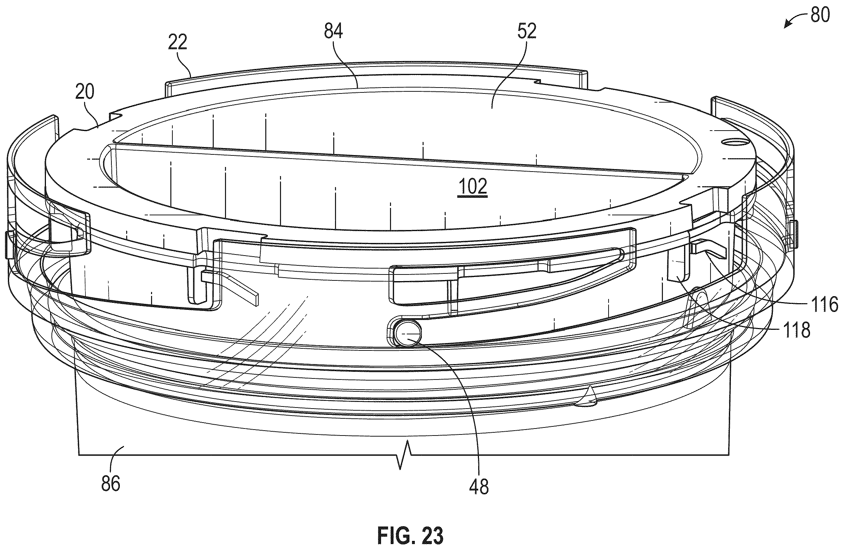

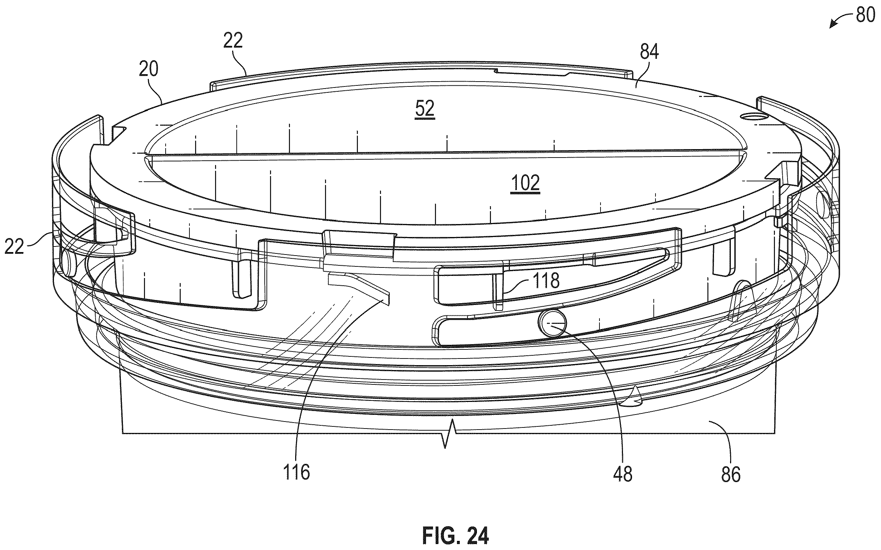

Referring now to FIGs. 22 and 23, once the cartridge 80 is assembled, it is installed into the cartridge seat 18 of the reservoir 14 in the same manner as the cartridge 10. Further, the annular seal 50 is similarly compressed against the annular landing 24. Full cartridge engagement in the cartridge seat 18 is shown in FIG. 23. As seen in FIG. 24, as the user partially rotates the cartridges 10, 80 in the thread 20, the compression of the seal 50 against the landing 24 is released, allowing the user to more easily pull the cartridge from the reservoir 14.

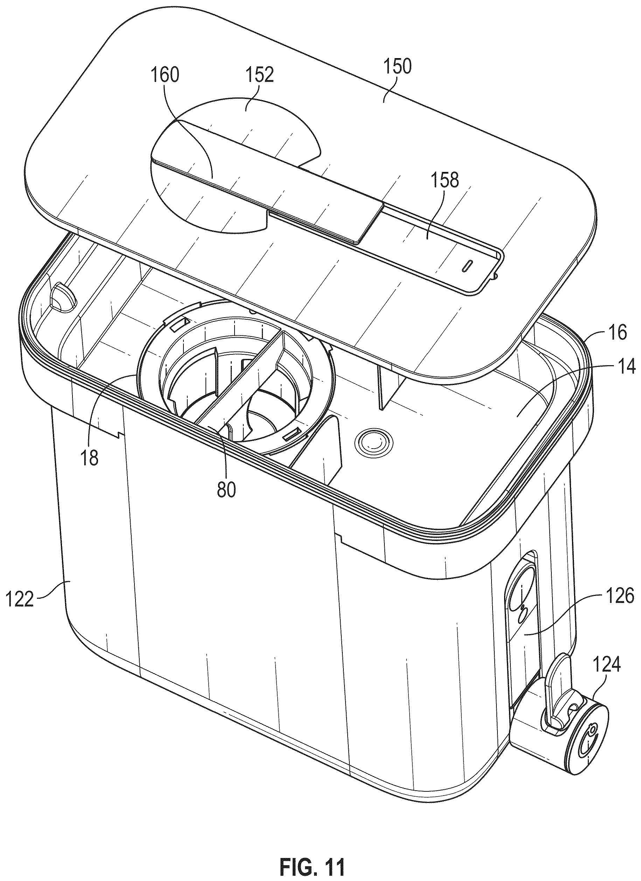

Referring now to FIG. 11, as an alternate to the pitcher 12, the container is optionally provided as a dispenser 122, featuring a dispensing valve 124 for dispensing treated water to the user. A cartridge life monitor is shown at 126, and as is known in the art, monitors at least one of cartridge time of use and treated water Total Dissolved Solids (TDS).

Referring now to FIG, 25, when the container is a pitcher 12, it is preferred that a handle 130 is secured at a single point 132 to the container. Support for the connection of the handle 130 and the container 12 itself is provided by engagement formations on the pitcher that accommodate the reservoir 14 in a tight engagement and enhance the structural support. These formations include a notch 134 in the upper edge 16 of the pitcher 12 that accommodates a depending tab 136 on the reservoir. Also included is a vertical slot 138 on the reservoir 14 near a lower edge 140 that slidably engages a vertically projecting rib 142 integrally formed in the pitcher 12. Using these formations, installation of the reservoir 14 into the pitcher 12 then enhances the structural strength of the pitcher, which becomes important when it is filled with water. The pitcher 12 also is preferably provided with the cartridge life monitor 126

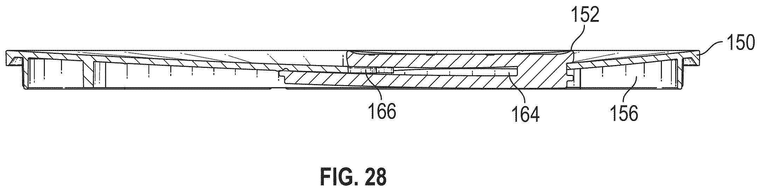

Referring now to FIGs. 11 and 26-28, a cover cup dispenser or lid 150 is provided to the container 12 either in pitcher or dispenser configuration, and being configured for releasable attachment to the upper edge 16 of the main container. A feature of the cover cup dispenser 150 is a lid dispenser 152 slidingly engaged relative to an opening 154 in the cover cup dispenser between an open and a closed position. In a preferred embodiment, the opening 154 is substantially circular, and the lid dispenser 152 is also substantially circular, however other shapes are contemplated.

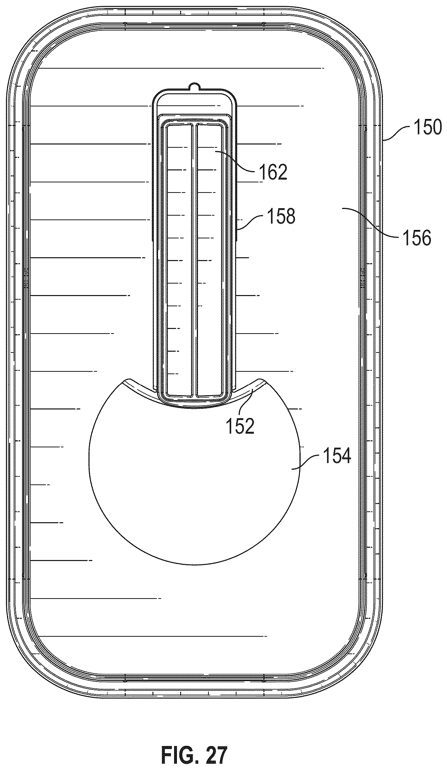

The cover cup dispenser 150 includes an underside 156 with a track 158 configured for guiding the sliding of the lid dispenser 152. More specifically, the lid dispenser 152 has an upper grip portion 160 configured for user engagement between an open and a closed position, the open position used to fill the reservoir 14 with untreated tap water. Connected to and depending from the grip portion 160 is a tongue portion 162 that sliding engages the track 158. A generally horizontal slot 164 in the cover cup dispenser 150 is slidably engaged by a depending tab 166 in the lid dispenser 152. Alignment between the lid dispenser 152 and the cover cup dispenser 150 is maintained by the engagement of the tab 166 in the slot 164, and also by the sliding engagement of the tongue portion 162 in the track 158. Referring now to FIG. 27, when in the open position, a circular portion of the margin of the lid dispenser 152 has the same arc of curvature as the opening 154.

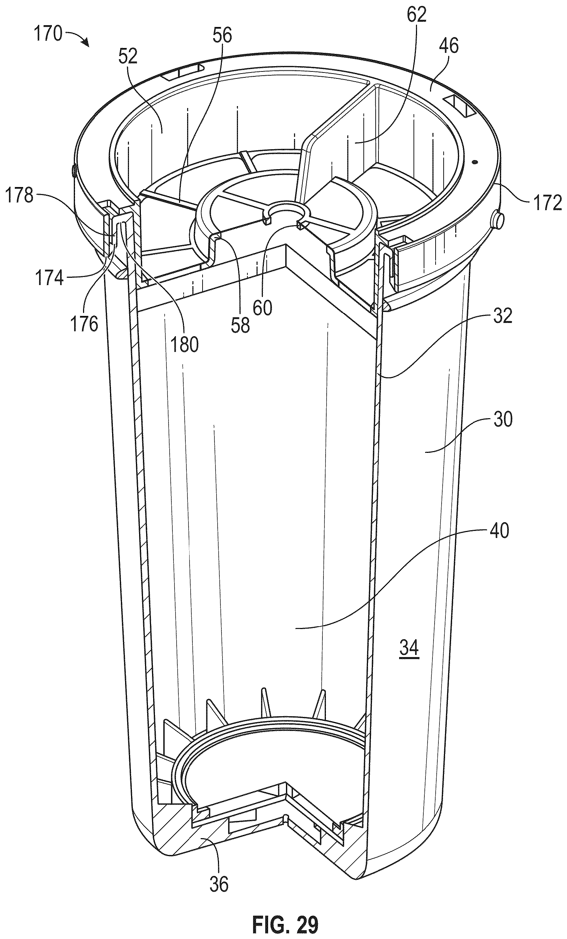

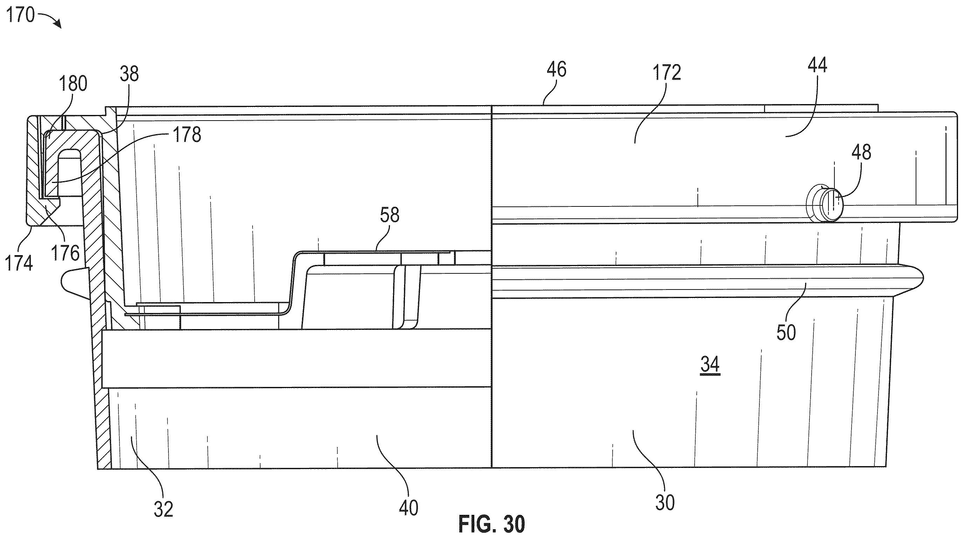

Referring now to FIGs. 29 and 30, an alternate embodiment to the filter cartridge 10 is generally designated 170. Components shared with the cartridge 10 are designated with identical reference numbers. A main feature of the cartridge 10 is that a cartridge cap 172 is otherwise similar in construction to the cartridge cap 28, but instead of being rigidly secured to the sump body 30, by chemical adhesive, ultrasonic welding or the like, the cartridge cap 170 is snappingly held in place upon the sump body 30 using at least one and preferably a plurality of depending clips 174. Preferably integrally formed with the cartridge cap 170, as by injection molding or the like, each of the clips 174 has a barbed tip 176 configured for slidingly engaging a lower annular edge 178 of a lip 180 of the open upper end 38 of the sump body 30. Upon engagement of the cartridge cap 172 with the edge 178, the cap is rotatable relative to the sump body 30. This has been found to be physically easier for users to secure the cartridge 10 into the cartridge seat 18 of the reservoir 14 as described above, particularly as the user rotates the cap 172 to achieve the desired positive engagement of the annular seal 50 in the cartridge seat.

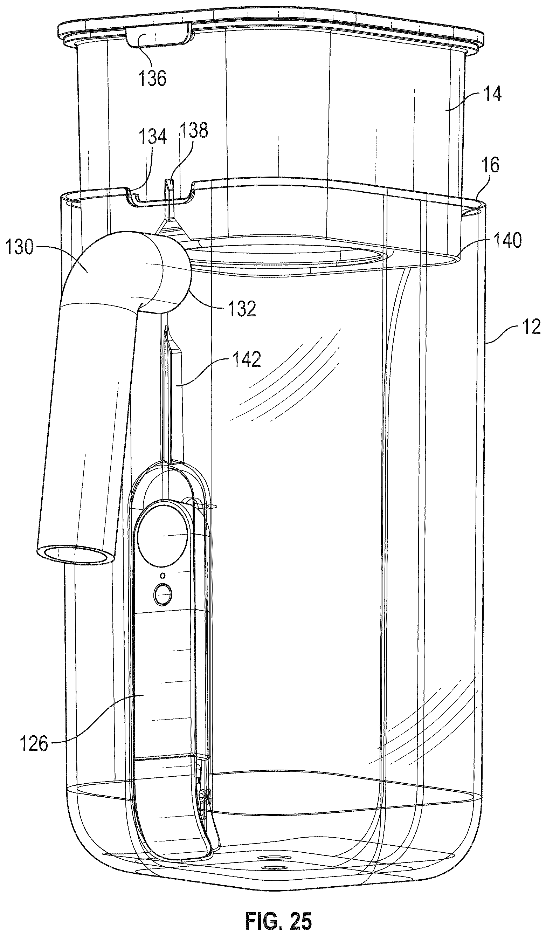

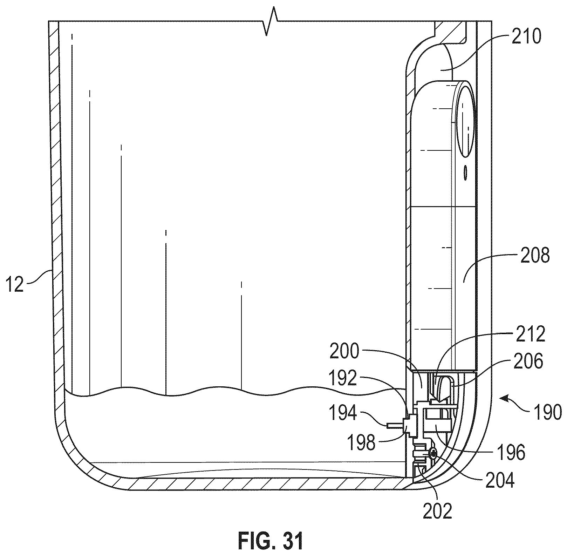

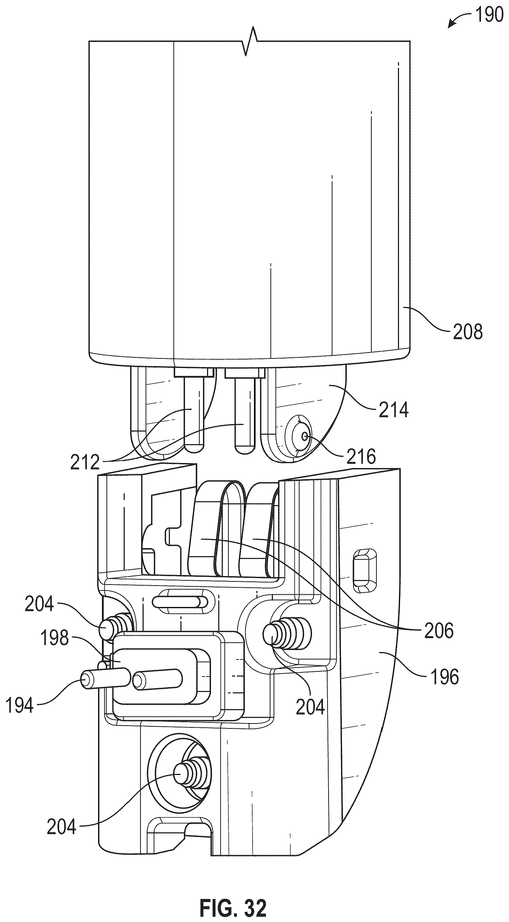

Referring now to FIGs. 25, 31 and 32, a modification of the cartridge life monitor 126 is generally designated 190 and is referred to as the cartridge life monitor assembly. As seen in FIG. 31, the pitcher 12 (as well as the dispenser 122, collectively referred to as the pitcher) is provided with a contact aperture 192 dimensioned to tightly accommodate a pair of projecting contact pins 194 associated with a TDS meter extender 196. While other orientations are contemplated, the contact pins 194 preferably extend horizontally from the extender 196. A resilient seal 198 surrounds the contact pins 194 to prevent leakage from the pitcher 12. A lower chamber 200 of the pitcher 12 accommodates the extender 196 and includes integral bosses 202 for receiving threaded fasteners 204 that hold the extender in place. Alternate technologies for holding the TDS meter extender 196 in place are contemplated, including, but not limited to chemical adhesives.

Inside the TDS meter extender 196, a pair of contacts 206 are each electrically associated with one of the contact pins 194, and while the shape may vary to suit the application, are preferably configured as spring-loaded straps. A TDS meter 208 is releasably secured, as by being snap-fit in a recess 210 in the pitcher 12, and includes a pair of depending contact formations 212 constructed and arranged to make mechanical and electrical contact with the contacts 206. While their orientation may vary to suit the application, the contact formations 212 are pin-like, depend vertically from the TDS meter 208, and are parallel to a longitudinal axis of the TDS meter. Also, preferably, the contact pins 194 extend at a 90° angle to the contact formations 212. Since the TDS meter 208 is removable from the pitcher 12 and the contact formations 212 are easily uncoupled from the contact pins 194, the user may use the meter to test other water samples for determining drinking water clarity. Additionally, the TDS meter 208 is preferably provided with at least one and preferably a pair of depending alignment tabs 214, each with an alignment detent 216 for enhancing positive engagement with the extender 196.

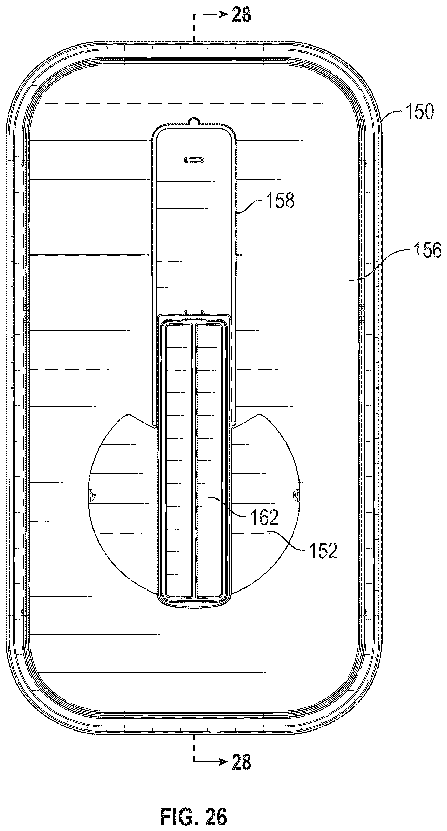

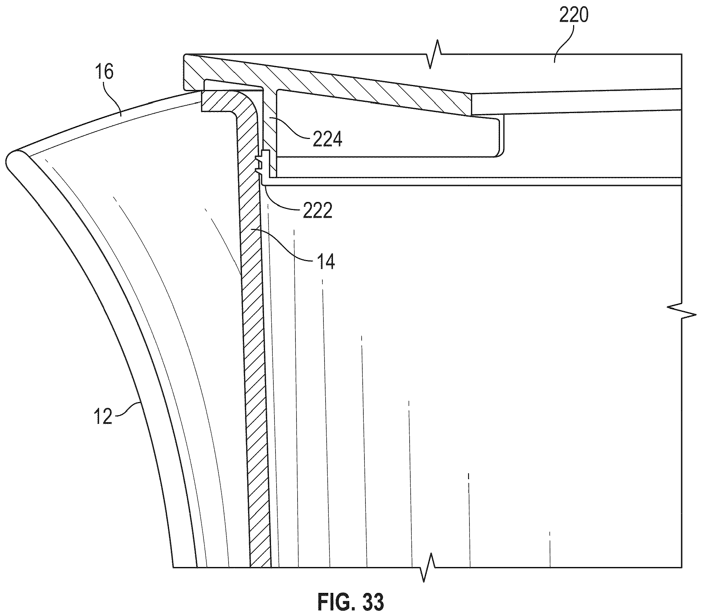

Referring now to FIGs. 26-28 and 33-35, an alternative embodiment to the cover cup dispenser or lid 150 is generally designated 220. Components shared with the cover cup dispenser 150 are designated with identical reference numbers. A main difference between the dispensers 150 and 220 is that the latter is designed to significantly reduce unwanted mixing of untreated water in the reservoir 14 with treated water in the pitcher 12 as the user tilts the pitcher to fill a cup or drinking glass.

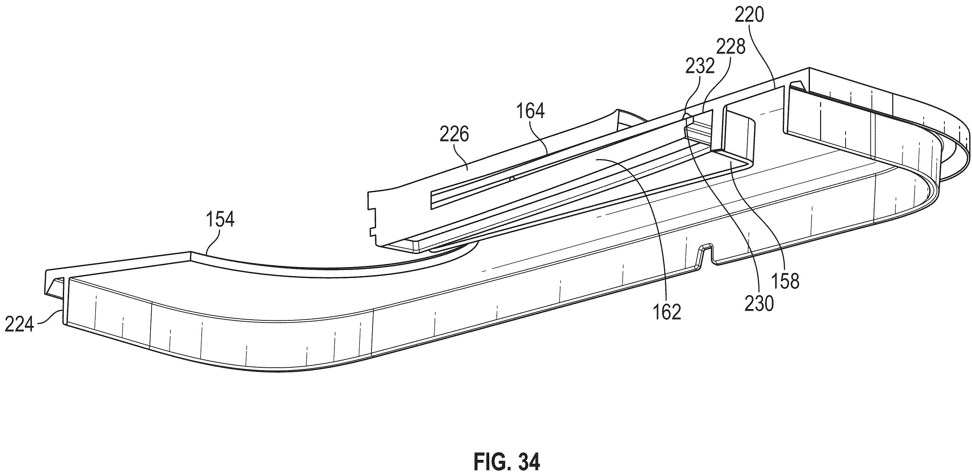

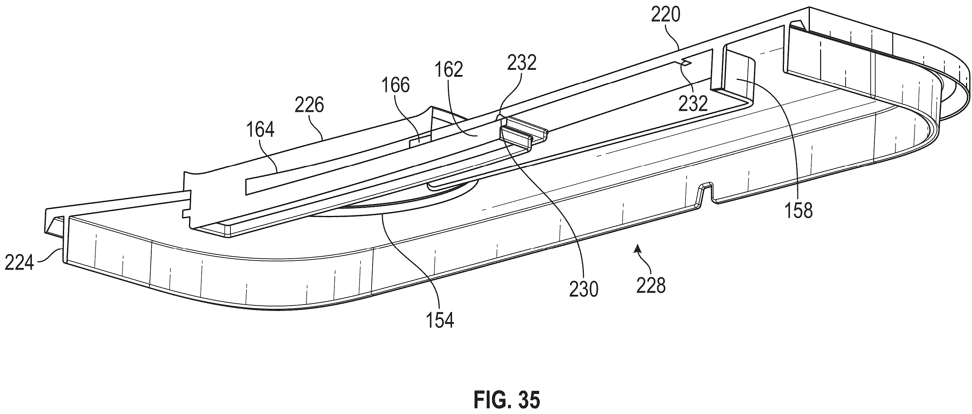

Accordingly, a multi-rib flexible or resilient seal 222 is placed at least around a depending front edge 224 of the lid 220. It is contemplated that in some embodiments, the seal 222 extends fully around the lid. Preferably, the seal 222 is held in place by overmolding or by chemical adhesives, as known in the art. A lid dispenser 226 slides relative to the opening 154 in the lid between an open and a closed position. As described above, the tongue portion 162 slidingly engages the track 158. The generally horizontal slot 164 in the cover cup dispenser 150 is slidably engaged by a depending tab 166 in the lid dispenser 152. Alignment between the lid dispenser 226 and the cover cup dispenser 220 is maintained by the engagement of the tab 166 in the slot 164, and also by the sliding engagement of the tongue portion 162 in the track 158. In addition, tactile formations 228 including a corresponding lug 230 and recess 232 on at least one of the lid dispenser 226 and the lid 220 alert the user to the either fully open (FIG. 34) or fully closed (FIG. 35). position of the lid.

While a particular embodiment of the present drinking water pitcher and dispenser with interchangeable cartridges has been described herein, it will be appreciated by those skilled in the art that changes and modifications may be made thereto without departing from the invention in its broader aspects and as set forth in the following claims.

## Claims

1. A water treatment system, comprising:
a main container (12) defining an interior and having an upper edge (16);
a reservoir (14) configured for removable insertion into the interior and location upon said upper edge, said reservoir defining a cartridge seat (18);
said cartridge seat (18) including a plurality of holes (20) in communication with a helical thread (22), and an annular landing (24) vertically depending from said thread;
a filter cartridge (10) including a cap (28) associated with a sump body (30) and having a filter media (42) in said sump body, said cap having a plurality of radially outwardly projecting pins (48) constructed and arranged for engaging said holes (20) and said helical thread;
an annular seal (50) disposed externally on said sump body and spaced below said cap;
said filter cartridge (10) and said cartridge seat (18) being configured so that upon said cap pins (48) engaging said helical thread, upon reaching a fully engaged position of said cap in said thread, said annular seal (50) is compressed against said annular landing (24).

2. The water treatment system of claim 1, wherein a number of said pins (48) is equal to a number of said holes (20) in said cartridge seat (18).

3. The water treatment system of claim 1, further including a detent (74) associated with an end of said helical thread (22) and configured so that upon engagement with one of said pins (48), a user receives a tactile sensation of full engagement of said cap (28) in said thread.

4. The water treatment system of claim 1, wherein said filter cartridge cap (28) is rotatable relative to said sump body (30).

5. The water treatment system of claim 1, wherein said filter cartridge cap (28) is threadably engaged onto said sump body (30, 86) using a cartridge thread that is in a reverse direction to a direction of said helical thread (22).

6. The water treatment system of claim 5, wherein said filter cartridge cap (28) has a depending cage (88) with an annular seal (94) configured for compressing a removable filter media (82) located at a bottom of said sump body.

7. The water treatment system of claim 1, wherein said filter cartridge sump body (86) has a bottom end with a screened outlet for treated water.

8. The water treatment system of claim 1, wherein said filter cartridge cap (28) has at least one gripping tab (62) for user manipulation of said cartridge in said cartridge seat.

9. The water treatment system of claim 8, wherein said at least one gripping tab (62) is a pair of tabs separated by an air escape port (60).

10. The water treatment system of claim 1, wherein said filter cartridge cap (28) is provided with a mesh screen (56) for allowing inflow of water, but preventing escape of the filter media.

11. The water treatment system of claim 1, further including a cover cup dispenser (150) configured for releasable attachment to the upper edge (16) of said main container (12), said cover cup dispenser having a lid dispenser (152) slidingly engaged relative to an opening in said cover cup dispenser between an open and a closed position, said cover cup dispenser including an underside (156) with a track (158) configured for guiding said sliding of said lid dispenser.

12. The water treatment system of claim 11, wherein said cover cup dispenser (150) is provided with a seal (222) on at least a front edge, and at least one of said cover cup dispenser and said lid dispenser features tactile formations (228) for indicating to a user at least one of a fully closed or a fully open position.

13. The water treatment system of claim 1, wherein said pitcher (12) is provided with a removable cartridge life monitor (190), said monitor having depending contacts (194) releasably electrically connected to a like pair of contact pins (206) located on an extender (196) mounted to said pitcher and projecting into said pitcher for measuring treated water quality.

14. The water treatment system of claim 13, wherein said removable cartridge life monitor depending contact formations (194) are parallel to a longitudinal meter axis, and said projecting contact pins (206) are disposed at a 90° angle to said contact formations.

15. A filter cartridge (10) for use in a water treatment system including a main container (12) defining an interior and having an upper edge (16), a reservoir (14) configured for removable insertion into the interior and location upon the upper edge, the reservoir defining a cartridge seat (18), the cartridge seat including a plurality of holes (20) in communication with a helical thread (22), and an annular landing (24) vertically depending from the thread, said filter cartridge comprising:
a cap (28, 84) having a plurality of radially outwardly projecting pins (48) constructed and arranged for engaging the holes (20) and the helical thread (22);
a sump body (30, 86) configured for engagement with said cap, said sump body having a contained filter media (42);
an annular seal (50) disposed externally on said sump body (30, 86) and spaced below said cap (28);
said filter cartridge being configured so that upon said cap pins (48) engaging the helical thread (22), upon reaching a fully engaged position of said cap in the thread, said seal is compressed against the annular landing.

16. The filter cartridge of claim 15, wherein said cap (28) has a vertically projecting annular skirt (44), said plurality of pins (48) project horizontally from said skirt, and said cap is rotatable relative to said sump body.

17. The water treatment system of claim 16, wherein said filter cartridge cap (28, 84) has a depending cage (88) with an annular seal (94) configured for compressing a removable filter media located at a bottom of said sump body.

18. The water treatment system of claim 15, wherein said filter cartridge sump body (86) has a bottom end with a screened outlet for treated water.

19. The water treatment system of claim 15, wherein said filter cartridge cap (84) has at least one gripping tab for user manipulation of said cartridge in said cartridge seat.

20. A filter cartridge (10, 80) for use in a water treatment system including a main container (12) defining an interior and having an upper edge (16), a reservoir (14) configured for removable insertion into the interior and location upon the upper edge, the reservoir defining a cartridge seat (18) , the cartridge seat including a plurality of holes (20) in communication with a helical thread (22), and an annular landing (24) vertically depending from the thread, said filter cartridge comprising:
a cap (84) having a plurality of radially outwardly projecting pins (48) constructed and arranged for engaging the holes and the helical thread;
a sump body (86) configured for engagement with said cap, said sump body having a contained filter media (82);
an annular seal (50) disposed externally on said sump body and spaced below said cap;
said filter cartridge cap has a depending cage (88) with an annular seal (94) configured for compressing a removable filter media located at a bottom of said sump body; and
said filter cartridge being configured so that upon said cap pins engaging the helical thread, upon reaching a fully engaged position of said cap in the thread, said seal is compressed against the annular landing; said filter cartridge cap is threadably engaged onto said sump body using a counter-clockwise cartridge thread.
